# EUROPÄISCHE PATENTSCHRIFT

(11) **EP 0 642 458 B1**
(45) Veröffentlichungstag und Bekanntmachung des Hinweises auf die Patenterteilung: **03.01.1996**
(21) Anmeldenummer: 93909790.3
(22) Anmeldetag: 24.05.1993
(51) Int. Cl.: B65G 1/04

(54) **LAGERBEHÄLTER MIT EINEM GREIFBEREICH FÜR EINE HANDHABUNGSVORRICHTUNG**
STORAGE CONTAINER WITH A GRIPPING ZONE FOR A HANDLING DEVICE
BAC DE STOCKAGE COMPORTANT UNE ZONE DE PREHENSION POUR UN DISPOSITIF DE MANUTENTION

(30) Priorität: 05.06.1992 DE 9207669 U
(43) Veröffentlichungstag der Anmeldung: 15.03.1995
(73) Patentinhaber: SIEMENS AKTIENGESELLSCHAFT, D-80333 München (DE)
(72) Erfinder: LEDERER, Jürgen, D-91244 Reichenschwand (DE)
(86) Internationale Anmeldenummer: DE9300452
(87) Internationale Veröffentlichungsnummer: WO9325458

(56) Entgegenhaltungen:
- EP-A- 0 461 735
- DE-U- 8 807 944
- FR-A- 2 299 247
- US-A- 3 547 282
- US-A- 3 901 547
- US-A- 4 556 355
- US-A- 5 120 101

## Beschreibung

Die Erfindung bezieht sich auf ein Regallagersystem mit einem Lagerbehälter, der einen Greifbereich für eine zum Ziehen und Schieben des Lagerbehälters ausgebildete Handhabungsvorrichtung aufweist, wobei der Greifbereich an mindestens einer Stirnseite des Lagerbehälters angebracht ist und an beiden Seiten eine Einkerbung aufweist, die so ausgebildet ist, daß jeweils ein Bolzen der Handhabungseinrichtung form- und/oder kraftschlüssig in Eingriff gebracht werden kann.

In Regallagersystemen, insbesondere in Hochregallagern, ist es üblich, Lagerbehälter vollautomatisch ein- und auszulagern. Zu diesem Zweck werden sogenannte Regalbediengeräte als Handhabungsvorrichtungen verwendet, die jedes beliebige Regalfach anfahren können und die über einen Greif- und Betätigungsmechanismus verfügen, mit dem die Lagerbehälter in das jeweilige Regalfach geschoben bzw. aus diesem herausgezogen werden können.

Bei einer Regalanlage nach der DE-C-33 24 349 besteht die Greifvorrichtung für die Lagerbehälter aus Platten, die in aufwendiger Weise zusammengedrückt werden und dabei die Lagerbehälter seitlich greifen. Außer dem großen Aufwand für den Greifmechanismus besteht ein weiterer Nachteil darin, daß ein schräg aufgenommener Behälter auch schräg wieder abgestellt wird, so daß sich Toleranzen beim Umsetzen addieren können.

In EP-A-04 61 735 wird zur Lösung dieses Problems ein System der eingangs genannten Art aus Lagerbehältern und Regalbediengerät vorgeschlagen, bei dem jeder Lagerbehälter auf seiner dem Regalbediengerät zugekehrten Stirnfläche an beiden Seiten je eine offene Schlitzführung für einen Mitnehmer aufweist, der aus einem endlosen Mitnehmerzugglied herausragt, welches um Umlenkräder geführt ist, deren Abstand voneinander mindestens so lang ist wie die Einschubtiefe des Lagerbehälters in die Fächer des Regals.

Bei dieser Vorrichtung besteht jedoch die Möglichkeit, daß die Synchronität zwischen den beiden Mitnehmern nicht absolut gewährleistet ist und/oder der Zugmechanismus inklusive Mitnehmer ein konstruktiv unvermeidbares Spiel aufweist, so daß ein Verkanten des Lagerbehälters bei der Handhabung durch das Regalbediengerät nicht ausgeschlossen werden kann. Ein weiterer Nachteil besteht darin, daß eine Schrägstellung des Lagerbehälters gegenüber dem Greifmechanismus bzw. den Mitnehmern zu einem unkorrekten Eingreifen der Mitnehmer in die Schlitzführungen führen kann, so daß ein sicheres Handhaben der Lagerbehälter nicht gewährleistet ist. Da die Schlitzführungen gegenüber den Mitnehmern ausreichend Spiel aufweisen müssen, um die beabsichtigte Führungsfunktion einwandfrei zu gewährleisten, können die Mitnehmer lediglich in Zug- oder Schubrichtung in Formschluß mit den Schlitzführungen treten, wobei jedoch zunächst das Spiel überwunden werden muß. Eine Verkippung eines Lagerbehälters um seine Längs- und/oder Querachse kann bei dieser Vorrichtung dazu führen, daß ein oder beide Mitnehmer aus der Schlitzführung springt, bzw. springen. Diese möglichen Nachteile können insbesondere dann zum Vorschein kommen, wenn Regalanlagen bedient werden sollen, bei denen es wegen ihrer Größe und den auftretenden Belastungen zu statischen Abweichungen der Geometrieverhältnisse kommen kann.

Aufgabe der Erfindung ist es daher, ein Regallagersystem der eingangs genannten Art so auszugestalten, daß er von einem speziell dafür ausgebildeten Endglied eines Greifmechanismus sicher handhabbar ist.

Diese Aufgabe wird dadurch gelöst, daß jeder Bolzen an mindestens einem Ende eine Verdickung aufweist und daß die Einkerbung an der Eingriffstelle schmäler als die Verdickung ist.

Dadurch wird sichergestellt, daß der Lagerbehälter auch bezüglich seiner Quer- und Längsachse kippstabilisiert handhabbar ist.

Durch das Zusammenwirken der Einkerbungen mit einem entsprechend ausgebildeten Bolzen läßt sich die Handhabung des Lagerbehälters weiter verbessern. Die Formgebung des Bolzens kann dabei so gewählt werden, daß er bereits an seiner Eingriffsstelle in Kraftschluß mit den Einkerbungen tritt, so daß ein Drehmoment um eine oder um mehrere Achsen durch den Kraftschluß kompensiert wird.

Wenn der im Eingriff mit der Einkerbung befindliche Bolzen an der Eingriffstelle gegenüber der Einkerbung noch ein Spiel aufweist, so kann gemäß einer vorteilhaften Ausbildung der Erfindung der Formschluß bezüglich einer Kippbewegung des Lagerbehälters um seine Quer- und/oder Längsachse dadurch hergestellt werden, daß jeder Bolzen von seinen Enden zur Mitte hin verjüngt ist. Bei dieser Abstimmung der Abmessungen der Einkerbung mit den Abmessungen des Bolzens, tritt die Einkerbung bei einer Verkippung des Lagerbehälters gegebenenfalls nach Überwindung eines vorgesehenen, durch die Bolzenabmessungen vorgegebenen Spieles, an der Verdickung in Formschluß mit dem Bolzen, so daß eine weitere Verkippung unterbunden wird.

Als besonders einfach und wirtschaftlich bietet sich dabei ein doppelkonischer Bolzen an, es sind jedoch auch andere Ausbildungen möglich, beispielsweise ein sich kurvenförmig zur Mitte verjüngender Bolzen. Damit ist gewährleistet, daß die Einkerbungen weder nach oben noch nach unten von dem Bolzen abgleiten können. Ebenso kann bei einem doppelkonischen Bolzen die Einkerbung zwar "V"-förmig ausgebildet sein, aber zur Spitze hin abgerundet sein.

Vorteilhaft ist es dabei, daß die Einkerbung automatisch zur Mitte des Bolzens verbracht wird, wenn der Bolzen zunächst mit einem dickeren Ende eingreift. Dadurch wird eine waagrechte Ausrichtung des Lagerbehälters erreicht.

Eine einfache vorteilhafte Ausbildung des Bolzens besteht darin, daß der Bolzen an seinem oberen Ende ein überstehendes Abschlußteil aufweist, das in einer besonders einfachen Ausführungsform plattenförmig, beispielsweise in Form eines Hammerkopfes oder als zusätzlich aufgebrachte Platte ausgebildet ist.

Eine weitere vorteilhafte Ausgestaltung der Erfindung besteht darin, daß die Einkerbungen in einer an der oberen Kante der Stirnseite des Lagerbehälters angebrachten waagrechten Platte eingebracht sind. Dadurch ergibt sich einerseits ein Freiraum gegenüber dem Bodenbereich des Lagerbehälters, d.h. der Bodenbereich des Lagerbehälters wird nicht durch die Platte vergrößert, so daß sich keine zusätzlichen Nachteile durch eine vergrößerte Bodenfläche ergeben (solche Nachteile wären beispielsweise eine Verklemmungsgefahr auf Förderbändern, eine vergrößerte Fläche für vorzusehende Wiegevorrichtungen, etc.). Außerdem kann die Platte gleichzeitig als leicht faßbarer Tragegriff verwendet werden, wenn der Lagerbehälter von Hand bewegt werden muß.

Da die Lagerbehälter vor oder nach der Bedienung durch das Handhabungsgerät meist auf ein Fördersystem gebracht werden, wo es vorkommen kann, daß ein Lagerbehälter an den nächsten stößt, ist es vorteilhaft, wenn die waagrechte Platte mit einer Stoßkante versehen ist. So wird verhindert, daß sich die Lagerbehälter mit ihren Platten übereinanderschieben und somit Störungen im Förderablauf verursachen.

Zur Vermeidung von Beschädigungen der Einkerbungen ist es sinnvoll, deren Ränder umzubördeln. Damit wird gleichzeitig erreicht, daß der Kraftschluß zwischen dem doppelkonischen Bolzen und den Einkerbungen erhöht wird. Bei einer aufwendigeren Ausgestaltung der Erfindung können die Ränder der Einkerbungen auch abgerundet sein, so daß beim Eingriff der Bolzen die waagrechte Ausrichtung eines um seine Längsachse leicht gekippten Lagerbehälters erleichtert wird.

Ein besonders gutes Zusammenspiel zwischen Lagerbehälter und Bolzen ergibt sich dadurch, daß die Bolzen über einen Greifzangenmechanismus betätigbar sind.

Ein Ausführungsbeispiel der Erfindung wird im folgenden anhand der Zeichnung näher erläutert. Dabei zeigen:
- FIG 1: einen Lagerbehälter mit einem Greifbereich;
- FIG 2: bis 5 verschiedene Ausführungen eines Bolzens im Eingriff mit einer Einkerbung,
- FIG 6: einen Greifzangenmechanismus eines Regalbediengerätes.

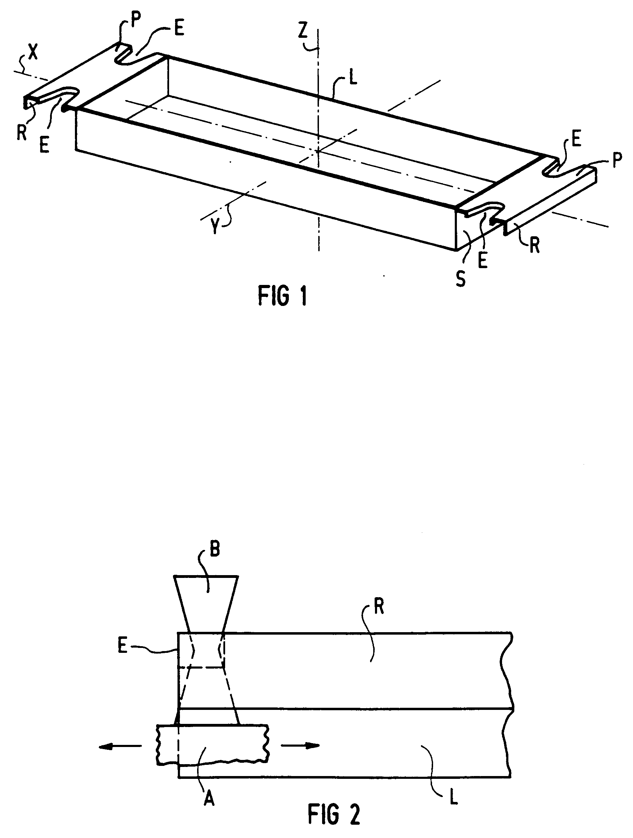

FIG 1 zeigt in dreidimensionaler Darstellung einen Lagerbehälter L mit seiner Längsachse X, seiner Querachse Y und seiner Hochachse Z. Der Lagerbeälter dient zur Aufnahme von beliebigem Stückgut. An beiden Stirnseiten S des Lagerbehälters L ist jeweils eine waagrechte Platte P angebracht, an deren beiden Seiten V-förmige Einkerbungen E vorgesehen sind, die zu ihrer Spitze hin abgerundet sind. Die Ränder der Einkerbungen E sowie die äußeren Ränder R der waagrechten Platten P sind dabei umgebördelt bzw. abgewinkelt. Die Ränder der Einkerbungen können beispielsweise auch abgerundet sein.

Die Umbördelung oder Abrundung der Ränder der Einkerbungen dient einerseits dem Zweck, daß bei einem vielfachen Greifen die Ränder formstabil bleiben und nicht einfach beschädigt werden können und andererseits der Form- und/oder Kraftschluß mit dem eingreifenden Bolzen vergrößert wird. Die Umbördelungen bzw. die Stoßkanten R an den Enden der Platten P sollen verhindern, daß sich die Lagerbehälter L nicht mit ihren Platten überlappen, wenn mehrere Lagerbehälter L auf Stoß geschoben werden.

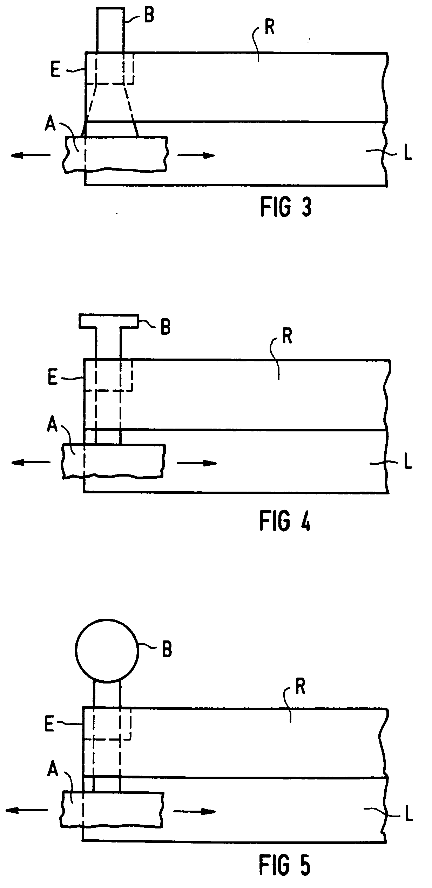

FIG 2 zeigt eine Ausführungsform eines Bolzens B, der zu beiden Enden hin verdickt ist. Die Verdickung ergibt sich durch eine doppelkonische Formgebung. Der doppelkonische Bolzen B ist das Endglied eines Greifmechanismus der in FIG 3 schematisch dargestellt ist. Er ist auf einem beweglichen Träger A montiert und greift in die Einkerbung E des Lagerbehälters L ein, wobei nur der linke Teil der Vorderansicht des Lagerbehälters L gezeigt ist. Der Doppelkonus B ist in seiner Größe so ausgebildet, daß er auch dann noch sicher in die Einkerbungen E eingreifen kann, wenn der Lagerbehälter um ein noch zulässiges Maß um seine Querachse Y oder seine Längsachse X verdreht ist. Die doppelkonische Ausführung gewährleistet, daß im ungünstigsten Fall ein weiteres Verkippen des Lagerbehälters ausgeschlossen ist und im gewünschten Normalfall die Einkerbungen E zur dünnsten Stelle des Bolzens rutschen können und somit der Lagerbehälter wieder optimal ausgerichtet ist.

In den Figuren 3 bis 6 sind weitere Ausführungsformen des Bolzens B dargestellt. Der Bolzen gemäß FIG 3 ist in seinem unteren Ende kegelstumpfförmig ausgebildet, so daß eine Bewegung der Einkerbung nach unten verhindert wird. Der Bolzen gemäß FIG 4 weist an seinem oberen Ende eine plattenförmige Ausbildung in Form eines Hammerkopfes auf. Anstelle der Hammerkopfausbildung kann auch eine zusätzlich aufgebrachte Platte vorgesehen sein. Der Bolzen gemäß FIG 5 hat an seinem oberen Ende eine kugelförmige Verdickung.

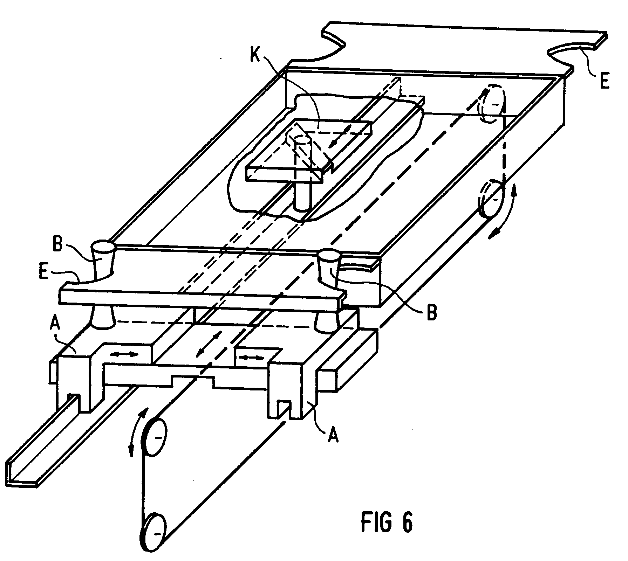

Um eine sichere, spielfreie Handhabung zu ermöglichen, wird ein starrer Greifmechanismus, wie er in FIG 6 schematisch dargestellt ist, verwendet. Dabei werden zwei auf Schienen geführte Greifarme A mittels eines verstellbaren Kulissenschiebers K geöffnet und geschlossen, wobei die Greifarme A inklusive des Kulissenschiebers K auf einem nicht dargestellten Tisch des Regalbediengeräts verfahrbar sind, so daß der Lagerbehälter nach Eingriff der an den Greifarmen A befestigten Bolzen B in die Einkerbung E des Lagerbehälters L auf das Regalbediengerät gezogen bzw. von diesem geschoben werden kann. Die Einkerbungen E sind in der Darstellung im Verhältnis zu den Bolzen B vergrößert gezeichnet, damit die in diesem Fall rundliche Ausführung der Kerben deutlicher hervortritt.

## Patentansprüche

1. Regallagersystem mit einem Lagerbehälter (L), der einen Greifbereich für eine zum Ziehen und Schieben des Lagerbehälters (L) ausgebildete Handhabungsvorrichtung (A, B) aufweist, wobei der Greifbereich an mindestens einer Stirnseite des Lagerbehälters (L) angebracht ist und an beiden Seiten eine Einkerbung (E) aufweist, die so ausgebildet ist, daß jeweils ein Bolzen (B) der Handhabungseinrichtung (A, B) form- und/oder kraftschlüssig in Eingriff gebracht werden kann, **dadurch gekennzeichnet** , daß jeder Bolzen (B) an mindestens einem Ende eine Verdickung aufweist und daß die Einkerbung (E) an der Eingriffstelle schmäler als die Verdickung ist.

2. Regallagersystem nach Anspruch 1, **dadurch gekennzeichnet** , daß jeder Bolzen (B) von seinen Enden zur Mitte hin verjüngt ist.

3. Regallagersystem nach Anspruch 2, **dadurch gekennzeichnet** , daß jeder Bolzen (B) doppelkonisch ausgebildet ist.

4. Regallagersystem nach Anspruch 3, **dadurch gekennzeichnet** , daß die Einkerbungen (E) "V"-förmig ausgebildet und zur Spitze hin abgerundet sind.

5. Regallagersystem nach einem der vorstehenden Ansprüche, **dadurch gekennzeichnet**, daß jeder Bolzen (B) an seinem oberen Ende ein über den Umfang des Bolzens (B) überstehendes Abschlußteil aufweist.

6. Regallagersystem nach Anspruch 5, **dadurch gekennzeichnet** , daß das Abschlußteil plattenförmig ausgebildet ist.

7. Regallagersystem nach einem der vorstehenden Ansprüche, **dadurch gekennzeichnet** , daß die Einkerbungen (E) in einer an der oberen Kante der Stirnseite (S) des Lagerbehälters (L) waagerecht angebrachten Platte (P) eingebracht sind.

8. Regallagersystem nach Anspruch 7, **dadurch gekennzeichnet** , daß die waagerechte Platte (P) mit einer Stoßkante versehen ist.

9. Regallagersystem nach einem der vorstehenden Ansprüche, **dadurch gekennzeichnet** , daß die Ränder der Einkerbungen (E) umgebördelt sind.

10. Regallagersystem nach einem der vorstehenden Ansprüche, **dadurch gekennzeichnet** , daß die Ränder der Einkerbungen (E) abgerundet sind.

11. Regallagersystem nach einem der vorstehenden Ansprüche, **dadurch gekennzeichnet** , daß die Bolzen (B) über einen Greifzangenmechanismus (A) betätigbar sind.

## Claims

1. Shelf storage system having a storage container (L) which has a gripping zone for a handling arrangement (A, B) which is formed for the purpose of pushing and pulling the storage container (L), wherein the gripping zone is provided on at least one face of the storage container (L) and has on both sides a notch (E) which is formed so that a respective stud (B) of the handling device (A, B) can be engaged in a formlocking and/or force-locking manner, characterised in that each stud (B) has a thickened portion at at least one end and in that the notch (E) at the point of engagement is narrower than the thickened portion.

2. Shelf storage system according to claim 1, characterised in that each stud (B) tapers from its ends towards the centre.

3. Shelf storage system according to claim 2, characterised in that each stud (B) is formed in the shape of a double cone.

4. Shelf storage system according to claim 3, characterised in that the notches (E) are formed so as to be "V"-shaped and are rounded off towards the point.

5. Shelf storage system according to one of the preceding claims, characterised in that each stud (B) has on its upper end a final portion which protrudes over the periphery of the stud (B).

6. Shelf storage system according to claim 5, characterised in that the final portion is formed in the shape of a plate.

7. Shelf storage system according to one of the preceding claims, characterised in that the notches (E) are made in a plate (P) horizontally provided at the upper edge of the face (S) of the storage container (L).

8. Shelf storage system according to claim 7, characterised in that the horizontal plate (P) is provided with a bumper edge.

9. Shelf storage system according to one of the preceding claims, characterised in that the edges of the notches (E) are beaded.

10. Shelf storage system according to one of the preceding claims, characterised in that the edges of the notches (E) are rounded off.

11. Shelf storage system according to one of the preceding claims, characterised in that the studs (B) can be actuated by way of a gripper mechanism (A).

## Revendications

1. Système de stockage à rayonnage comportant un récipient de rangement (L), qui possède une partie de préhension pour un dispositif de manipulation (A,B) conçu pour permettre de tirer et de repousser le récipient de rangement (L), la partie de préhension étant montée sur au moins une face frontale du récipient de rangement (L) et possédant, des deux côtés, une encoche (E) agencée de telle sorte qu'un axe respectif (B) du dispositif de manipulation (A,B) peut y être inséré selon une liaison par formes complémentaires et/ou selon une liaison positive, caractérisé par le fait que chaque axe (B) possède une partie épaissie à au moins une extrémité et que l'encoche (E) est plus étroite, au niveau du point d'insertion, que la partie épaissie.

2. Système de stockage de rayonnage suivant la revendication 1, caractérisé par le fait que chaque axe (B) se rétrécit depuis ses extrémités en direction du centre.

3. Système de stockage de rayonnage suivant la revendication 2, caractérisé par le fait que chaque axe (B) possède une forme biconique.

4. Système de stockage de rayonnage suivant la revendication 3, caractérisé par le fait que les encoches (E) ont une forme en "V" et ont la pointe arrondie.

5. Système de stockage de rayonnage suivant l'une des revendications précédentes, caractérisé par le fait que chaque axe (B) possède, à son extrémité supérieure, une partie terminale qui fait saillie au-delà de la circonférence de l'axe (B).

6. Système de stockage de rayonnage suivant la revendication 5, caractérisé par le fait que la partie terminale est agencée sous la forme d'une plaque.

7. Système de stockage de rayonnage suivant l'une des revendications précédentes, caractérisé par le fait que les encoches (E) sont aménagées dans une plaque (P) montée horizontalement sur le bord supérieur de la face frontale (S) du récipient de rangement (L).

8. Système de stockage de rayonnage suivant la revendication 7, caractérisé par le fait que la plaque horizontale est pourvue d'une arête de butée.

9. Système de stockage de rayonnage suivant l'une des revendications précédentes, caractérisé par le fait que les bords des encoches (E) sont rabattus.

10. Système de stockage de rayonnage suivant l'une des revendications précédentes, caractérisé par le fait que les bords des encoches (E) sont arrondis.

11. Système de stockage de rayonnage suivant l'une des revendications précédentes, caractérisé par le fait que les axes (B) peuvent être actionnés par l'intermédiaire d'un mécanisme à pinces de saisie (A).
